## Europäisches Patentamt

## European Patent Office

## Office européen des brevets

(19)

(11) Veröffentlichungsnummer: **0 010 597**
**B1**

(12) **EUROPÄISCHE PATENTSCHRIFT**

(45) Veröffentlichungstag der Patentschrift: **28.04.82**

(21) Anmeldenummer: **79103398.8**

(22) Anmeldetag: **12.09.79**

(51) Int. Cl.³: **B 23 Q 7/00, B 65 G 47/04, B 21 D 43/00**

(54) Zuführrinne für Stangen und Rohre.

(30) Priorität: **14.10.78 DE 2844887**

(43) Veröffentlichungstag der Anmeldung:
**14.05.80 Patentblatt 80/10**

(45) Bekanntmachung des Hinweises auf die Patenterteilung:
**28.04.82 Patentblatt 82/17**

(84) Benannte Vertragsstaaten:
**AT BE FR GB IT NL SE**

(56) Entgegenhaltungen:
**DD - A - 50 498**
**DD - C - 121 762**
**DD - A - 128 502**
**DE - A1 - 2 449 241**
**DE - A1 - 2 613 444**
**DE - B - 2 217 717**
**US - A - 3 759 077**

(73) Patentinhaber: **Th. Kieserling & Albrecht GmbH & Co. KG**
**Birkenweiher 66**
**D-5650 Solingen 1 (DE)**

(72) Erfinder: **Lüben, Heinz-Ernst**
**Steinauer Strasse 52**
**D-4010 Hilden (DE)**

Courier Press, Leamington Spa, England.

Zuführrinne für Stangen und Rohre.

Die Erfindung bezieht sich auf eine Zuführrinne gemäß dem Oberbegriff von Anspruch 1. Bei Schäl- und Richtmaschinen für Stangen, Rohre und Draht wird dem bei der Bearbeitung entstehenden Geräuschniveau immer mehr Bedeutung beigemessen. Der zur Beseitigung oder zur Dämpfung dieser Geräusche erforderliche Aufwand muß in gewissen Grenzen gehalten werden, um eine Verteuerung der Maschinen zu vermeiden.

Auf dem Gebiet des Transportes von Walzgut ist es aus der DD—A 50 498 bekannt, ein Bund von empfindlichen Rohren von einer Sammelstelle auf einen tiefergelegenen Rollgant mit Hilfe von mehreren mit Abstand über den Rollgang gespannten und über die Länge des Rollgangs verteilten Bändern abzusenken. Die Bänder sind an einem Ende aufgerollt und die Rollen können mit einer sie verbindenden Welle und einer daran befestigten Kurbel über den Rollgang gespannt werden und zum Absenken des auf die gespannten. Bämdern gelegten Bundes durch Abwickeln verlängert werden, so daß das Bund behutsam auf den Rollgang abgelegt wird. Nachteilig bei dieser Ausführung der Mittel zum Absenken der Werkstücke ist der zusätzlich zum Rollgang erforderliche Steuerungsaufwand zur Bewegung der Bänder. Die Zielrichtung der dortigen Erfindung ist das beschädigungsfreie Ablegen der Rohre.

Aus der DE—A 24 49 241 ist es bekannt, bei einer Rinne der eingangs erwähnten Art einen Einheber vorzusehen, der das einzelne ankommende Werkstück ohne bedeutsamen Aufprall in der Rinne ablegt. Der Einheber ist starr mit einem schwenkbaren Segment des Rinnenprofils verbunden. Im geöffnetem Zustand der Rinne rollt die dort gezeigte Stange auf eine Zulaufschräge gegen den bei der Öffnung der Rinne hoch geschwenkten Einheber, der die Stange dann gesteuert in die darunter gelegene Rinne absenkt. Beim Absenken von Einheber und Stange schließt sich die Rinne.

Der Erfindung liegt gegenüber dieser zuletzt genannten Veröffentlichung die Aufgabe zugrunde, eine Vereinfachung der Einheberlösung zu finden, die ohne zusätzlichen Steuerungsaufwand auskommt.

Die erfindungsgemäße Lösung dieser Aufgabe ist im kennzeichnenden Teil des Hauptanspruches wiedergegeben. Die Bänder verhindern einen Aufprall des Werkstücks beim Einlegen in die Rinne. Jedes Band muß bei geöffneter Rinne soweit über dem Grund derselben hängen, daß ein einfallendes Werkstücks nicht auf das untere Profilsegment prallt. Zusätzlich muß gewährleistet sein, daß mindestens ein Ende des Bandes nach dem Einlegen des Werkstücks so gesteuert wird, daß bei geschlossener Rinne das Werkstück ausschließlich von der Rinne und nicht von dem Band geführt wird. Bei geschlossener Rinne muß das Band unterhalb des Rinnengrundes zurückbewegt werden. Dies geschieht dadurch, daß die Bandenden an zwei oben angeordneten beweglichen Profilsegmenten angelenkt sind. Wenn die Aufhängungen der Bandenden ohnehin eng beieinander sind, ist eine Absenkung mindestens eines Bandendes ausreichend. Die Aufhängungen der Bandenden führen abseits ihres Schwerpunktes eine Drehbewegung durch, die bei geeigneter Wahl für den Ort der Aufhängung in eine horizontale zusammenführende und in eine abwärts gerichtete Bewegung für die Bandenden umgesetzt werden kann. Die ohnehin gesteuerte Bewegung der Rinnenprofilsegmente wird für die Bewegung der Bandenden ausgenutzt. Es entfällt damit eine separate Steuerung für die Dämpfungsbänder. Es sind vorzugsweise textile Bänder vorgesehen.

Die Anlenkung der Bänder gemäß Anspruch 2 hat zudem den Vorteil, daß die Spannkraft der Bänder bei gerade eingelegtem Werkstück den Schließvorgang der Profilsegmente fördert.

Die Weiterbildung der Erfindung gem. Anspruch 3 dient dazu, zu verhindern, daß die Bänder im geschlossenen Zustand der Rinne das Werkstück berühren. Auch eine einfache Berührung des Bandes mit dem häufig rotierenden und auf einer wendelförmigen Bahn axial bewegten Rohr führt zu einem vorzeitigen Verschleiß. Eine Einspannung oder "Führung" des Werkstücks durch die Bänder kann durch eine ausreichende Bemessung der Bandlänge verhindert werden. Deshalb dient die erwähnte Wahl der Aufhängepunkte der Bandenden der Verhinderung unnötigen Verschleisses an den Bändern. Die Länge der Bänder entspricht mindestens dem maximalen Werkstück-Durchmesser. Die maximale Bandlänge hängt von der Wahl der Aufhängungspunkte ab. Eine maximale Bandlänge des drei-fachen maximalen Werkstück-Durchmessers ist jedenfalls im Normalfall ausreichend.

Die Erfindung wird im einzelnen anhand des in der Zeichnung dargestellten bevorzugten Ausführungsbeispiels näher erläutert. Es zeigen:

Fig. 1 eine Zuführrinne mit verän-derlichem Querschnitt in geöffneter Stellung und mit angehobenem Band

Fig. 2 die Rinne in geschlossenem Zustand und mit abgesenktem Band.

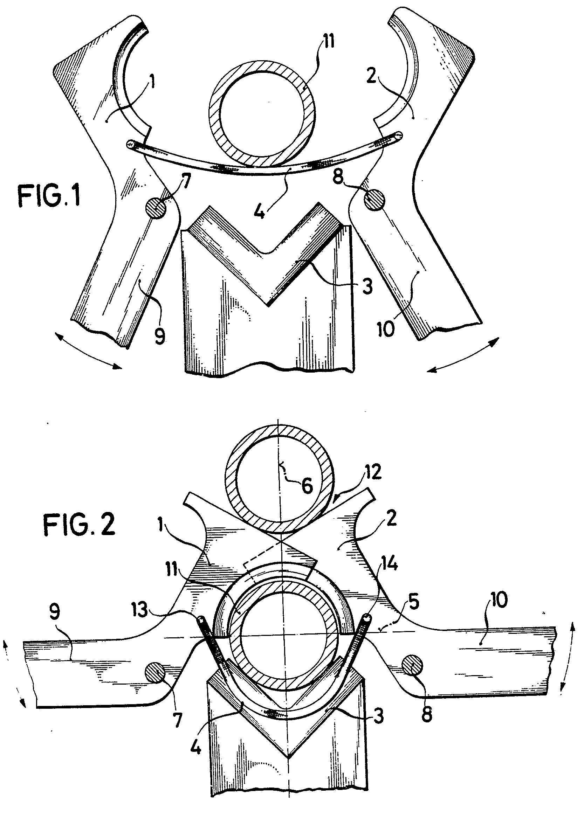

Die erfindungsgemäße Zuführrinne besteht aus einer Vielzahl hintereinander angeordneter Gruppen von Profilsegmenten 1, 2, 3, wovon nur eine in den Figuren dargestellt ist. Diese das Rohr umschließenden Profilsegmente sind gleichmäßig über die Länge des hier im Querschnitt gezeigten Rohres 11 verteilt. Das Rohr wird von einem Paar nicht dargestellter konkaver Walzen mit sich kreuzenden Achsen angetrieben, sodaß es in der Rinne wendelförmig vorbewegt wird. Die Werkstücke werden der Rinne einzeln von oben zugeführt. Bei der Bearbeitung kann das nächste Werkstück vorbereitet in dem V-förmigen Ausschnitt 12, der von den zwei beweglichen Profilsegmenten 1 und 2 gebildet wird, liegen. Beim Öffnen der Rinne (vergl. Fig. 1) fällt das Werkstück dann automatisch in die Rinne.

An mindestens je zwei einander gegenüberliegenden Profilsegmenten, die beidseits der Längsmitte der Rinne angeordnet sind, ist an Aufhängungen 13, 14 je ein Band angelenkt. Die Aufhängungen sind an den beiden beweglichen Profilsegmenten 1, 2, vorgesehen. Sie sind oberhalb der horizontalen Mitte 5 des größten Querschnitts der Rinne bzw. des Rohres 11 vorgesehen. Die Aufhängungen des Bandes sind symmetrisch zur senkrechten Mitte 6 des Rohrquerschnitts angeordnet. Die Länge der Bänder bestimmt sich so, daß sie, wie in Fig. 2 gezeigt, im geschlossenen Zustand der Rinne den gesamten Rinnenquerschnitt freigeben, wonach sich die minimale Länge des Bandes bestimmt, weiterhin wird die maximale Länge des Bandes so bestimmt, daß im geöffneten Zustand der Rinne gem. Fig. 1 das Rohr unabhängig von seiner Einfallrichtung vor dem Auftreffen auf das untere V-förmige und ortsfeste Profilsegment 3 abgefangen wird. Die Bandlänge beträgt zwischen dem 1, 2- und 3-fachen des maximalen Werkstückdurchmessers.

Die beweglichen Segmente 1 u. 2 sind um die Achsen der Wellen 7 und 8 schwenkbar gelagert. Die Wellen 7, 8 sind unterhalb der horizontalen Querschnitte 5 und beidseits der vertikalen Querschnitte 6 der Rinne angeordnet. Sie erstrecken sich über die gesamte Länge der Rinne und sind drehfest mit den darauf gelagerten Profilsegmenten 1, 2 verbunden. Die Profilsegmente, die auf einer der Wellen befestigt sind, bilden eine Gruppe. Die Hebel 1 und 2 sind als zweiarmige Hebel ausgebildet, an denen je ein Arm 9, 10 nur abgebrochen dargestellt ist und mit je einem nicht gezeigten Verstellmittel, z.B. einem Hydraulikzylinder, verbunden sein kann. Die Bewegungen der Profilsegmente 1 und 2 sind auf nicht dargestellte, beliebige Weise synchronisiert. Wegen der Befestigung der Hebel 1, 2, auf den Wellen 7, 8 genügt es, wenn nur wenige Hebel jeder Gruppe angetrieben werden.

In Längsrichtung der Rinne gesehen, sind die Hebel 1, 2 und das ortsfeste Profilsegment 3 hintereinander in wechselnder Folge und mit Zwischenraum angeordnet. Dadurch kann unterhalb des maximalen Durchmessers jeder beliebige Werkstück-Durchmesser geführt werden. Die Bänder hängen in den Zwischenräumen an gegenüberliegenden Seiten benachbarter beweglicher Profilsegmente.

## Patentansprüche

1. Zuführrinne zum axialen Transport von runden, rotierenden Stangen, Rohren (11) und dergleichen, mit mindestens teilweise zum Öffnen und Schließen der Rinne schwenkbaren Rinnenprofilsegmenten (1, 2), wobei die Werkstücke (11) der Rinne einzeln und quer zu deren Längserstreckung zugeführt werden, derart, daß die Werkstücke im wesentlichen von oben nach unten in die Rinne hinein befördert werden, mit in- und aus dem Rinnenquerschnitt beweglichen Mitteln (4), die quer zur Längserstreckung der Rinne angeordnet sind, und dem steuerbaren Absenken des einzubringenden Werkstücks in die Rinne dienen, dadurch gekennzeichnet, dass die Mittel aus einer Mehrzahl von über die Länge der Rinne verteilten Bändern (4) bestehen, die an beiden Enden beidseits der vertikalen Mitte (6) des Rinnenquerschnittes an den Rinnenprofilsegmenten (1, 2) mit Abstand von deren Drehpunkten (7, 8) angelenkt sind.

2. Rinne nach Anspruch 1, dadurch gekennzeichnet, daß die Aufhängung (13, 14) für die Bänder (4) oberhalb der Drehpunkte (7, 8) der schwenkbaren Rinnenprofilsegmente (1, 2) angeordnet sind.

3. Rinne nach Anspruch 1 und 2, dadurch gekennzeichnet, daß die Aufhängungen (13, 14) der Bänder (4) einen Abstand haben, der größer ist als der Durchmesser des größten zu führenden Rohres (11).

## Claims

1. Feeding channel for axial transportation of bars, tubes, and similar objects, comprising at least partially tiltable sections (1, 2) to open and close the channel, the workpieces being fed separately and in a transverse direction into the channel, resulting in a vertical movement of the workpiece from above into the channel, the feeding channel comprising means to be moved in and out of the passage for the workpiece which is formed by the sections (1, 2, 3) these means being located in a plane rectangular to the longitudinal axis of the channel, enabling the workpieces (11) to be controllably lowered into the channel characterized in that the means comprise a series of belts (4) dissipated over the length of the channel and hinged at the sections (1, 2) on both sides of the vertical axis (6) of the channel and apart from their gyratory points (7, 8).

2. Channel according to claim 1, characterized in that the hinges (13, 14) for the belts (4) are located above the gyratory points (7, 8) of the tiltable sections (1, 2).

3. Channel according to claims 1 and 2 characterized in that the hinges (13, 14) of the belts (4) are located at a greater distance than the maximum diameter of a tube to be fed.

## Revendications

1. Canal d'alimentation pour le transport axial de ronds, tubes (11) et autres semblables, à mouvement rotatif, comportant des éléments profilés de canal (1, 2), qui peuvent au moins partiellement pivoter pour l'ouverture et la fermeture du canal, les pièces (11) étant amenées isolément dans le canal et selon une direction perpendiculaire à sa dimension longitudinale, de sorte que les pièces sont amenées essentiellement de haut en bas dans le canal, et comportant des moyens (4), mobiles dans et à l'extérieur de la section du canal, disposés perpendiculairement à la dimension longitudinale du canal et servant à las descente contrôlée de la pièce qu'il faut y amener, caractérisée en ce que les moyens sont constitués d'un certain nombre de bandes (4), réparties sur la longueur de canal et qui s'articulent, à leurs deux extrémités, de part de d'autre de l'axe vertical (6) de la section du canal, sur les éléments profilés (1, 2) du canal, à une certaine distance des points de rotation (7, 8) de ces éléments.

2. Canal selon la revendication 1, caractérisée en ce que les fixations (13, 14) des bandes (4) sont disposées au-dessus des points de rotation (7, 8) des éléments profilés pivotants (1, 2) du canal.

3. Canal selon les revendications 1 et 2, caractérisée en ce que les fixations (13, 14) des bandes (4) sont à une distance supérieure au diamètre du plus grand tube à guider (11).

FIG.1

FIG.2